# FASCICULE DE BREVET EUROPEEN

(11) **EP 2 870 349 B1**
(45) Date de publication et mention de la délivrance du brevet: **04.05.2016**
(21) Numéro de dépôt: 13744672.0
(22) Date de dépôt: 02.07.2013
(51) Int. Cl.: F16D 11/00, F02K 1/76, F16D 11/10, F16D 11/14

(54) **MÉCANISME D'ACCOUPLEMENT ET DE DÉSACCOUPLEMENT POUR UN DISPOSITIF EMBARQUÉ D'UNE NACELLE DE TURBORÉACTEUR**
KOPPLUNG UND ENTKOPPLUNGSMECHANISMUS FÜR EINE STRAHLTURBINEGONDEL
CLUTCHING AND DECLUTCHING MECHANISM FOR AN EMBARQUED NACELLE OF A TURBOFAN ENGINE

(30) Priorité: 05.07.2012 FR 1256438; 08.08.2012 FR 1257685
(43) Date de publication de la demande: 13.05.2015
(73) Titulaire: Aircelle, 76700 Gonfreville L'Orcher (FR)
(72) Inventeur: HURLIN, Hervé, F-91430 Igny (FR); GILO, Olivier, F-78000 Versailles (FR); KERBLER, Olivier, F-92160 Antony (FR)
(74) Mandataire: Gaillarde, Frédéric F. Ch.
(86) Numéro de dépôt international: PCT/FR2013/051554
(87) Numéro de publication internationale: WO 2014/006321

(56) Documents cités:
- EP-A1- 0 089 884
- EP-A1- 0 743 443
- WO-A1-2011/135217
- US-A1- 2003 066 284
- US-A1- 2006 042 226
- US-A1- 2006 049 020
- US-B1- 6 487 846

## Description

La présente invention concerne un mécanisme d'accouplement et de désaccouplement, notamment pour une nacelle de turboréacteur qui est équipée d'un dispositif d'inversion de poussée prolongé d'une tuyère à géométrie variable.

Une nacelle présente généralement une structure tubulaire longitudinale comprenant, d'avant en arrière, une entrée d'air en amont du turboréacteur, une section médiane destinée à entourer une soufflante du turboréacteur, une section aval abritant un dispositif d'inversion de poussée et destiné à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à générer par l'intermédiaire des aubes de la soufflante en rotation un flux d'air chaud, également appelé flux primaire, issu de la chambre de combustion du turboréacteur, et un flux d'air froid, ou flux secondaire, qui circule à l'extérieur du turboréacteur à travers un passage annulaire, également appelé veine secondaire, formé entre un carénage du turboréacteur et une paroi interne de la nacelle. Les deux flux d'air sont éjectés du turboréacteur par l'arrière de la nacelle.

Le rôle d'un dispositif d'inversion de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue au moins la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur.

Dans le cas d'un inverseur à grilles de déviation, le dispositif d'inversion de poussée comporte des grilles de déviation ayant pour fonction la réorientation du flux d'air, qui sont souvent associées à des volets d'inversion et à au moins un capot mobile.

Le capot est monté coulissant en translation d'avant en arrière sur la structure de la nacelle, selon une direction sensiblement parallèle à un axe longitudinal de la nacelle, entre une position avant rassemblée dans laquelle le capot ferme un passage destiné au flux dévié, et une position arrière déployée dans laquelle le capot ouvre ce passage et découvre les grilles de déviation.

Par ailleurs, outre sa fonction d'inversion de poussée, le capot coulissant comporte une portion aval formant la tuyère d'éjection visant à canaliser l'éjection des flux d'air.

La tuyère est conçue pour moduler la poussée en faisant varier sa section de sortie en réponse à des variations du réglage de la puissance du moteur et des conditions de vol.

Ce type de tuyère mobile à section variable est connu sous le nom de tuyère adaptative, ou sous les acronymes VFN "Variable Fan Nozzle" ou VAFN pour "Variable Area Fan Nozzle" en terminologie anglaise.

Selon les variantes les plus connues, la tuyère adaptative peut être monobloc, ou bien formée d'une série de déflecteurs juxtaposés.

Les déflecteurs sont entraînés en mouvement par l'intermédiaire d'un arbre de sortie longitudinal qui est embarqué sur le capot mobile, l'arbre de sortie étant entraîné en rotation par l'intermédiaire d'un arbre d'entrée moteur qui est solidaire de la structure de la nacelle.

Il est connu du document WO-2011/135217-A1 de prévoir un mécanisme qui est conçu pour accoupler en rotation l'arbre d'entrée et l'arbre de sortie entre eux lorsque le capot occupe sa position avant rassemblée, et pour désaccoupler l'arbre d'entrée et l'arbre de sortie lorsque le capot occupe sa position arrière déployée.

Ce mécanisme d'accouplement est du type à crabot, l'arbre d'entrée comprenant une première denture et l'arbre de sortie comprenant une seconde denture complémentaire qui est conçue pour engrener avec la première denture.

L'accouplement de l'arbre de sortie et de l'arbre d'entrée est réalisé par l'imbrication axiale de la première denture dans la seconde denture au cours du déplacement du capot vers sa position avant rassemblée.

Pour permettre cette imbrication, l'arbre de sortie doit être bloqué angulairement en rotation.

A cet effet, le mécanisme selon le document WO-2011/135217-A1 comporte un moyen de verrouillage en rotation de l'arbre de sortie qui permet de verrouiller l'arbre de sortie en rotation sous l'effet du déplacement du capot vers sa position arrière déployée.

Ce mécanisme n'est pas entièrement satisfaisant puisque rien n'est prévu pour bloquer et verrouiller en rotation l'arbre d'entrée moteur, ce qui risque de compromettre l'accouplement de l'arbre d'entrée avec l'arbre de sortie en cas de rotation intempestive de l'arbre d'entrée.

Pour pallier notamment cet inconvénient, l'invention propose un mécanisme d'une nacelle de turboréacteur, pour l'accouplement et le désaccouplement d'un arbre d'entrée moteur qui est monté à rotation sur un bâti avant autour d'un axe secondaire longitudinal, et d'un arbre de sortie qui est monté à rotation sur un bâti arrière autour de l'axe secondaire et qui entraîne en rotation un pignon de sortie, le bâti arrière étant monté coulissant d'avant en arrière par rapport au bâti avant, selon une direction longitudinale, entre une position avant rassemblée et une position arrière déployée, le mécanisme étant équipé d'un moyen d'accouplement qui est conçu pour accoupler en rotation l'arbre d'entrée et l'arbre de sortie entre eux lorsque le bâti arrière mobile occupe sa position avant rassemblée, et pour désaccoupler l'arbre d'entrée et l'arbre de sortie lorsque le bâti arrière occupe sa position arrière déployée, caractérisé en ce que le mécanisme comporte un premier moyen de verrouillage en rotation de l'arbre d'entrée sur le bâti avant associé, et un second moyen de verrouillage en rotation de l'arbre de sortie sur le bâti arrière associé, qui sont conçus pour verrouiller automatiquement l'arbre d'entrée et l'arbre de sortie en rotation respectivement, sous l'effet du déplacement du bâti arrière mobile vers sa position arrière déployée.

Selon une autre caractéristique, le premier moyen de verrouillage de l'arbre d'entrée, du type à crabot, comporte :
- un premier pignon de verrouillage qui est lié en rotation sur l'arbre d'entrée autour de l'axe secondaire et qui délimite une première denture radiale orientée vers l'avant,
- une bague de verrouillage qui délimite une seconde denture radiale agencée en regard de ladite première denture, la bague de verrouillage étant montée coulissante axialement sur le bâti avant entre une position avant de déverrouillage dans laquelle la première denture est agencée en regard de la deuxième denture associée, et une position arrière de verrouillage dans laquelle la première denture coopère avec la deuxième denture pour verrouiller en rotation l'arbre d'entrée sur le bâti avant associé,
- un premier moyen de rappel élastique qui est interposé axialement entre le bâti avant et la bague de verrouillage et qui rappelle automatiquement la bague de verrouillage vers sa position arrière de verrouillage, et le bâti arrière mobile comporte une portion d'appui qui est conçue pour appuyer axialement contre la bague de verrouillage vers l'avant, de sorte que la bague de verrouillage est contrainte axialement dans sa position avant de déverrouillage à l'encontre du premier moyen de rappel élastique lorsque le bâti arrière occupe sa position avant rassemblée, et la bague est libérée automatiquement dans sa position arrière de verrouillage lorsque le bâti arrière est entraîné vers sa position arrière déployée.

Selon cette caractéristique, le verrouillage en rotation de l'arbre d'entrée est réalisé de façon automatique par déplacement du bâti arrière.

De même, le second moyen de verrouillage de l'arbre de sortie, du type à crabot, comporte :
- une troisième denture radiale qui est solidaire du bâti arrière et qui est orientée vers l'arrière,
- un second pignon de verrouillage qui est lié en rotation sur l'arbre de sortie autour de l'axe secondaire et qui délimite une quatrième denture radiale agencée en regard de ladite troisième denture,
- un moyen de guidage en coulissement axial de l'arbre de sortie entre une position arrière de déverrouillage dans laquelle la troisième denture est agencée en regard de la quatrième denture, et une position avant de verrouillage dans laquelle la troisième denture coopère avec la quatrième denture pour verrouiller en rotation l'arbre de sortie sur le bâti arrière associé,
- un second moyen de rappel élastique qui est interposé axialement entre le bâti arrière et le second pignon de verrouillage pour rappeler automatiquement l'arbre de sortie vers sa position avant de verrouillage, de sorte que l'arbre de sortie est contraint axialement dans sa position arrière de déverrouillage à l'encontre du second moyen de rappel élastique lorsque le bâti arrière mobile occupe sa position avant rassemblée, et l'arbre de sortie est libéré automatiquement dans sa position avant de verrouillage lorsque le bâti arrière mobile est entraîné vers sa position arrière déployée.

Selon cette caractéristique, le verrouillage en rotation de l'arbre de sortie est réalisé automatiquement par déplacement du bâti arrière, à la suite du verrouillage de l'arbre d'entrée.

De plus, le mécanisme est conçu de sorte que le premier moyen de verrouillage verrouille l'arbre d'entrée avant que le second moyen de verrouillage verrouille l'arbre de sortie.

Cette caractéristique permet d'éviter une rotation intempestive de l'arbre d'entrée après que l'arbre de sortie soit verrouillé en rotation.

Aussi, le mécanisme est conçu de sorte que le moyen d'accouplement désaccouple l'arbre d'entrée et l'arbre de sortie à la suite du verrouillage en rotation de l'arbre d'entrée et de l'arbre de sortie.

Cette caractéristique permet de conserver l'orientation angulaire de l'arbre d'entrée et de l'arbre de sortie pour permettre le ré-accouplement de ces arbres à la suite du désaccouplement.

De plus, le moyen d'accouplement de l'arbre d'entrée avec l'arbre de sortie est du type à crabot et comporte une première portion d'accouplement à denture axiale qui est agencée sur une extrémité axiale arrière de l'arbre d'entrée, et une seconde portion d'accouplement à denture axiale de forme complémentaire qui est agencée sur une extrémité axiale avant de l'arbre de sortie.

Selon un autre aspect, le mécanisme est conçu pour entraîner en rotation un élément récepteur qui est monté à rotation autour d'un axe principal longitudinal et qui est conçu pour entraîner en mouvement une tuyère adaptative du turboréacteur.

De plus, l'arbre d'entrée est solidaire en rotation d'un pignon moteur qui délimite une denture du même diamètre que la denture du pignon de sortie et qui est accolé axialement au pignon de sortie lorsque l'arbre de sortie occupe sa position arrière de déverrouillage, et l'élément récepteur est solidaire en translation axiale du bâti arrière, l'élément récepteur délimitant une denture réceptrice conçue pour coulisser axialement depuis la denture du pignon moteur, jusque sur la denture du pignon de sortie au cours du coulissement de l'arbre de sortie vers sa position avant de verrouillage pour permettre le verrouillage en rotation de l'élément récepteur.

Selon cette caractéristique, l'élément récepteur est verrouillé en rotation lorsque le bâti arrière occupe sa position arrière déployée et que l'arbre d'entrée est désaccouplé de l'arbre de sortie.

De plus, l'élément récepteur est une couronne annulaire qui comporte :
- une portion externe périphérique annulaire qui coopère avec un logement complémentaire formé dans le bâti arrière pour solidariser l'élément récepteur et le bâti arrière en translation axiale, et
- une portion interne annulaire qui délimite la denture réceptrice qui est conçue pour engrener avec le pignon moteur et le pignon de sortie.

Aussi, le bâti arrière est porté par un capot mobile d'un dispositif embarqué d'inversion de poussée d'un turboréacteur.

L'invention concerne aussi une nacelle de turboréacteur, caractérisée en ce qu'elle est équipée d'un mécanisme pour l'accouplement et le désaccouplement selon l'une quelconque des revendications précédentes.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective, qui illustre une nacelle d'un turboréacteur d'un aéronef comportant un capot mobile représenté dans sa position avant rassemblée ;
- la figure 2 est une vue en perspective, qui illustre la nacelle de la figure 1 dont le capot occupe sa position arrière déployée ;
- la figure 3 est une vue éclatée en perspective, qui illustre le mécanisme d'accouplement et de désaccouplement d'un arbre d'entrée et d'une couronne annulaire de sortie, par le biais d'un arbre de verrouillage selon l'invention ;
- la figure 4 est une vue en perspective en coupe axiale longitudinale, qui illustre le mécanisme de la figure 3 dans lequel la couronne annulaire de sortie et l'arbre d'entrée sont libres en rotation ;
- la figure 5 est une vue en perspective en coupe axiale longitudinale, qui illustre le mécanisme de la figure 3 dans lequel l'arbre d'entrée est verrouillé en rotation ;
- la figure 6 est une vue en perspective en coupe axiale longitudinale, qui illustre le mécanisme de la figure 3 dans lequel l'arbre de verrouillage, la couronne annulaire de sortie et l'arbre d'entrée sont verrouillés en rotation ;
- la figure 7 est une vue en perspective en coupe axiale longitudinale, qui illustre le mécanisme de la figure 3 dans lequel l'arbre d'entrée et l'arbre de verrouillage sont désaccouplés, et l'arbre de verrouillage et la couronne annulaire de sortie sont verrouillés en rotation ;
- la figure 8 est une vue en perspective, qui illustre le mécanisme de la figure 3 comportant un élément récepteur composé d'une couronne annulaire dentée engrenant sur un pignon moteur ;
- la figure 9 est une vue en perspective, qui illustre une variante de réalisation du mécanisme selon l'invention, dans laquelle l'élément récepteur est un pignon récepteur ;
- la figure 10 est une vue en perspective en coupe axiale longitudinale, qui illustre une variante de réalisation dans laquelle la couronne annulaire de sortie engrène directement sur le pignon de sortie de l'arbre de verrouillage 28 en position motrice.

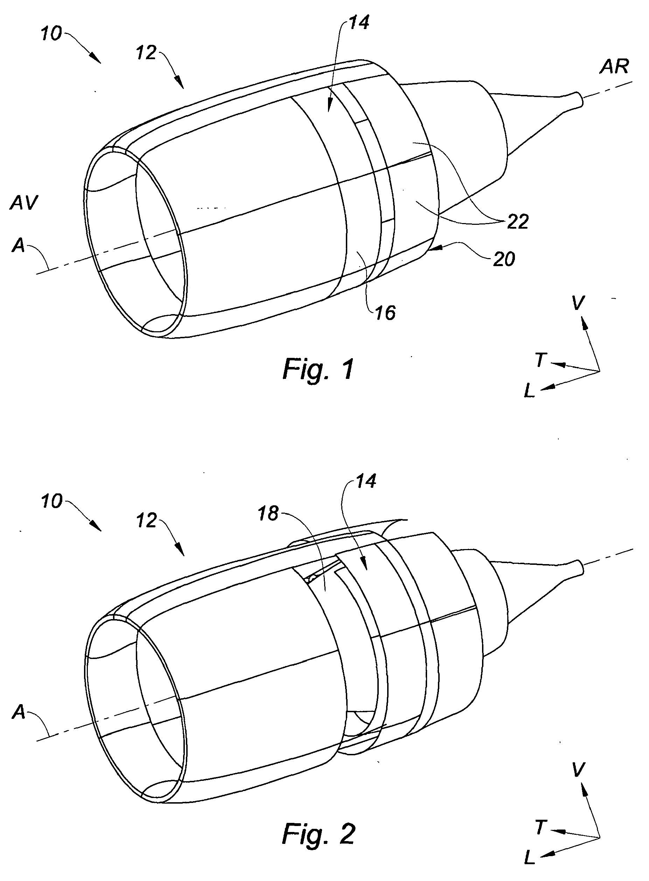

Dans la description et les revendications, on utilisera à titre non limitatif les expressions « avant » et « arrière » en référence à la partie gauche et à la partie droite respectivement des figures 1 à 10 et aux repères AV pour avant et AR pour arrière, à la figure 1.

De plus, pour clarifier la description et les revendications, on adoptera à titre non limitatif la terminologie longitudinal, vertical et transversal en référence au trièdre L, V, T indiqué aux figures.

On a représenté à la figure 1 une nacelle 10 tubulaire qui s'étend selon un axe A principal longitudinal et qui abrite un turboréacteur conçu pour équiper un aéronef.

La nacelle 10 comporte notamment une structure 12 qui est destinée à être fixée sur l'aéronef, et un capot 14 monté mobile par rapport à la structure 12.

Le capot 14 appartient à un dispositif d'inversion de poussée et il comporte une portion avant formant l'obturateur 16 d'un passage 18 d'un flux d'air dévié, et une portion arrière formant la tuyère 20 d'éjection visant à canaliser l'éjection des flux d'air.

A cet effet, le capot 14 est monté coulissant en translation d'avant en arrière sur la structure 12 de la nacelle 10, selon une direction sensiblement parallèle à l'axe A longitudinal de la nacelle 10, entre une position avant rassemblée représentée à la figure 1, dans laquelle le capot 14 ferme le passage 18 destiné au flux dévié, et une position arrière déployée représentée à la figure 2, dans laquelle le capot 14 ouvre ce passage 18 pour permettre la déviation du flux.

De plus, la tuyère 20 est une tuyère à section variable, aussi appelée tuyère adaptative, qui comporte un ou une série de déflecteurs 22 agencés en anneau et montés mobiles de façon à faire varier la section d'éjection du flux d'air.

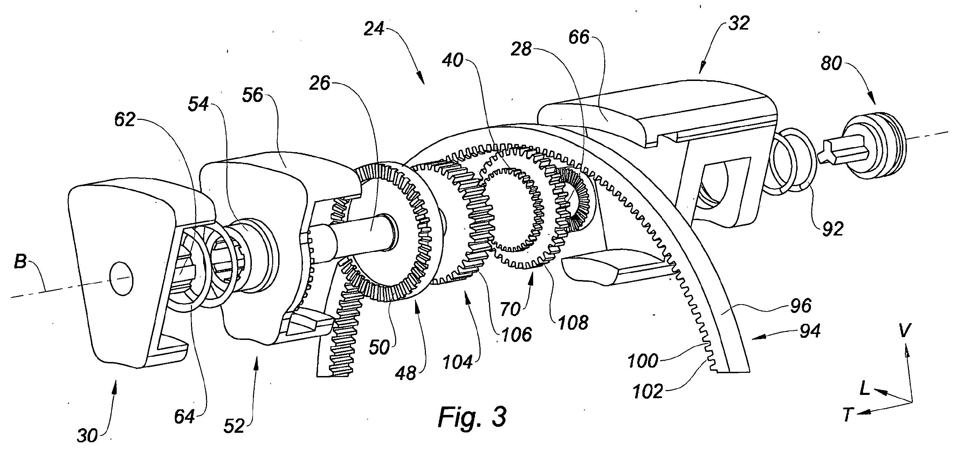

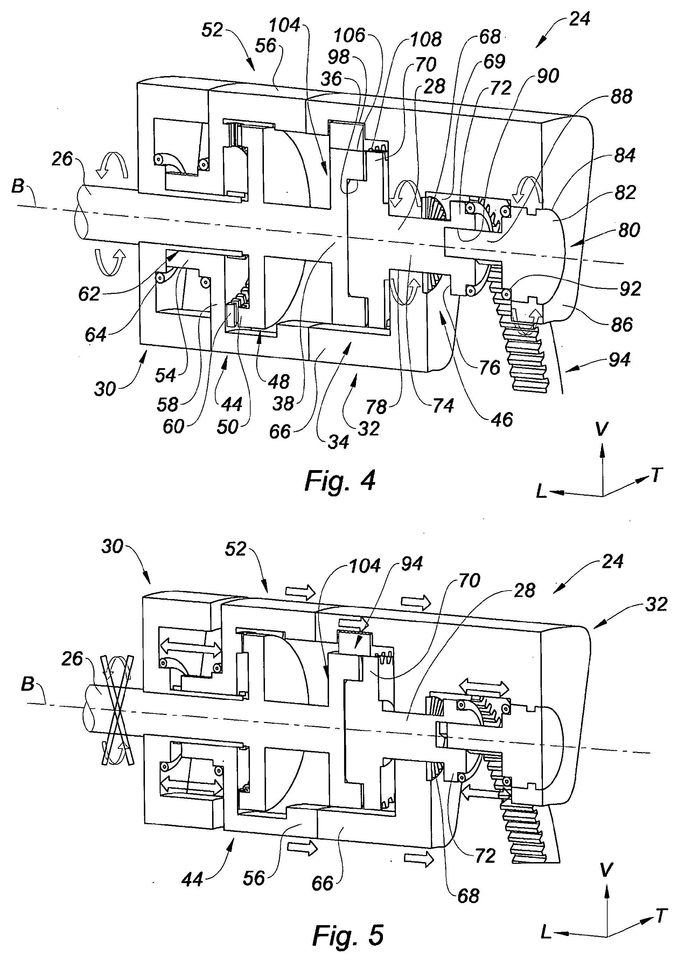

En référence aux figures 3 et 4, la nacelle 10 est équipée d'un mécanisme 24 pour l'accouplement et le désaccouplement d'un arbre d'entrée 26 moteur et d'une couronne annulaire de sortie 94 par le biais d'un arbre de verrouillage 28.

La couronne de sortie 94 est destinée à entraîner en mouvement les déflecteurs 22 de la tuyère 20, lorsque le capot 14 occupe sa position avant rassemblée.

L'arbre d'entrée 26 est monté en rotation sur un bâti avant 30 solidaire de la structure 12 de la nacelle 10, autour d'un axe B secondaire longitudinal, l'arbre d'entrée 26 étant entraîné en rotation par un moteur (non représenté), comme un moteur électrique par exemple.

De même, la couronne de sortie 94 est montée en rotation sur un bâti arrière 32 autour de l'axe A principal longitudinal, l'ensemble constitué par le bâti arrière 32 et la couronne de sortie 94, accompagnée par son arbre de verrouillage 28 étant embarqué sur le capot 14 mobile.

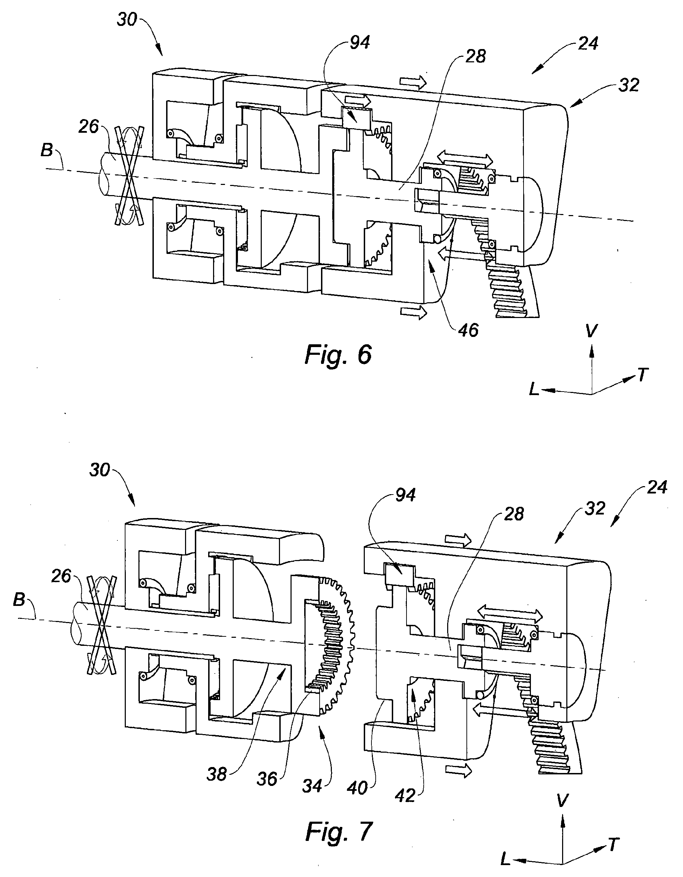

Ainsi, le bâti arrière 32 est monté coulissant d'avant en arrière par rapport au bâti avant 30, selon l'axe B secondaire, entre une position avant rassemblée représentée à la figure 4, et une position arrière déployée représentée à la figure 7.

De façon complémentaire, le mécanisme 24 est équipé d'un moyen d'accouplement 34 qui accouple en rotation l'arbre d'entrée 26 et la couronne annulaire de sortie 94 entre eux lorsque le bâti arrière 32 occupe sa position avant rassemblée, comme on peut le voir à la figure 4, et qui désaccouple l'arbre d'entrée 26 et la couronne annulaire de sortie 94 lorsque le bâti arrière 32 occupe sa position arrière déployée, comme on peut le voir à la figure 7.

Le moyen d'accouplement 34 est du type à crabot et il comporte une première portion d'accouplement 36 femelle à denture axiale qui est agencée sur une extrémité axiale arrière 38 de l'arbre d'entrée 26, et une seconde portion d'accouplement 40 mâle à denture axiale de forme complémentaire qui est agencée sur une extrémité axiale avant 42 de l'arbre de verrouillage 28, selon la figure 7.

La première portion d'accouplement 36 est conçue pour s'imbriquer dans la seconde portion d'accouplement 40 au cours du déplacement du bâti arrière 32 depuis sa position arrière déployée, vers sa position avant rassemblée.

A titre non limitatif, on entend par « crabot » tous dispositifs d'accouplement direct de deux pièces mécaniques par coopération de dents et rainures.

De plus, le mécanisme 24 comporte un premier moyen de verrouillage 44 en rotation de l'arbre d'entrée 26 sur le bâti avant 30 associé, et un second moyen de verrouillage 46 en rotation de l'arbre de verrouillage 28 sur le bâti arrière 32 associé.

Le premier moyen de verrouillage 44 et le second moyen de verrouillage 46 sont conçus pour verrouiller automatiquement l'arbre d'entrée 26 et l'arbre de verrouillage 28 en rotation respectivement, sous l'effet du déplacement du capot 14 mobile contenant le bâti arrière 32 vers leur position arrière déployée.

A cet effet, le premier moyen de verrouillage 44 de l'arbre d'entrée 26 est du type à crabot et il comporte un premier pignon de verrouillage 48 qui est lié en rotation sur l'arbre d'entrée 26 autour de l'axe B secondaire.

Comme on peut le voir aux figures 3 et 4, le premier pignon de verrouillage 48 délimite une première denture 50 radiale orientée vers l'avant.

De plus, le premier moyen de verrouillage 44 comporte une bague de verrouillage 52 annulaire qui est constituée d'un manchon 54 axial cannelé, d'une portion cylindrique 56 qui s'étend axialement selon l'axe B secondaire et d'un disque 58 radial intermédiaire qui relie le manchon 54 et la portion cylindrique 56 entre eux.

La portion cylindrique 56 est interposée axialement entre le bâti avant 30 et le bâti arrière 32.

Le disque 58 radial délimite une seconde denture 60 radiale agencée en regard de la première denture 50 radiale complémentaire.

De plus, le manchon cannelé 54 de la bague de verrouillage 52 est monté coulissant axialement sur un tronçon cannelé 62 complémentaire du bati avant 30.

Ainsi, la bague de verrouillage 52 est montée coulissante axialement selon l'axe B secondaire sur le bâti avant 30, entre une position avant de déverrouillage représentée à la figure 4, dans laquelle la première denture 50 radiale est agencée en regard de la deuxième denture 60 radiale associée, et une position arrière de verrouillage représentée aux figures 5 à 7, dans laquelle la première denture 50 radiale coopère avec la deuxième denture 60 radiale pour verrouiller en rotation l'arbre d'entrée 26 sur le bâti avant 30 associé.

De façon complémentaire, le premier moyen de verrouillage 44 est équipé d'un premier moyen de rappel élastique 64, ici un ressort hélicoïdal, qui est interposé axialement entre le bâti avant 30 et une face avant du disque 58 radial de la bague de verrouillage 52, de façon à rappeler automatiquement la bague de verrouillage 52 vers sa position arrière de verrouillage.

De plus, le bâti arrière 32 comporte une portion d'appui 66 qui s'étend axialement vers l'avant et qui est conçue pour appuyer axialement vers l'avant contre la portion cylindrique 56 de la bague de verrouillage 52, de sorte que la bague de verrouillage 52 est contrainte axialement dans sa position avant de déverrouillage à l'encontre du premier moyen de rappel élastique 64 lorsque le bâti arrière 32 occupe sa position avant rassemblée.

En outre, la bague de verrouillage 52 est libérée automatiquement dans sa position arrière de verrouillage lorsque le bâti arrière 32 est entraîné vers sa position arrière déployée avec le capot 14.

De même, le second moyen de verrouillage 46 en rotation de l'arbre de verrouillage 28, et donc de la couronne annulaire de sortie 94 est du type à crabot et il comporte une troisième denture 68 radiale qui est conformée sur une paroi radiale 69 du bâti arrière 32 et qui est orientée vers l'arrière.

L'arbre de verrouillage 28 comporte un pignon de verrouillage 70 avant et un second pignon de verrouillage 72 arrière qui sont liés en rotation entre eux par un tronçon cylindrique 74 intermédiaire.

Le second pignon de verrouillage 72 est lié en rotation sur l'arbre de verrouillage 28 autour de l'axe B secondaire, et il délimite une quatrième denture 76 radiale agencée en regard de la troisième denture 68 radiale complémentaire.

Le tronçon cylindrique 74 intermédiaire est monté coulissant dans un alésage 78 formé dans la paroi radiale 69 du bâti arrière 32.

L'alésage 78 forme un moyen de guidage en coulissement axial de l'arbre de verrouillage 28 selon l'axe B secondaire, entre une position arrière de déverrouillage, représentée à la figure 4, dans laquelle la troisième denture 68 est agencée en regard de la quatrième denture 76, et une position avant de verrouillage représentée aux figure 6 et 7, dans laquelle la troisième denture 68 coopère avec la quatrième denture 76 pour verrouiller en rotation l'arbre de verrouillage 28 sur le bâti arrière 32.

De façon complémentaire, le bâti arrière 32 est équipé d'un moyen de guidage 80 en coulissement et en rotation, qui comporte une embase 82 cylindrique montée en rotation autour de l'axe B secondaire dans un logement 84 formé dans une paroi arrière 86 du bâti arrière 32.

De plus, le second moyen de verrouillage 46 comporte un second moyen de rappel élastique 92, ici un ressort hélicoïdal, qui est interposé axialement entre la paroi arrière 86 du bâti arrière 32 et le second pignon de verrouillage 72, pour rappeler automatiquement l'arbre de verrouillage 28 vers sa position avant de verrouillage.

Le moyen de guidage 80 comporte une tige de guidage 88 cannelée qui s'étend axialement vers l'avant depuis l'embase 82 et qui coopère avec une chemise 90 de forme complémentaire formée à l'extrémité arrière de l'arbre de verrouillage 28, afin de guider en translation axiale l'arbre de verrouillage 28, et de permettre le suivi en rotation du second moyen de rappel élastique 92 lorsque l'arbre de verrouillage 28 se trouve en rotation.

Ainsi, l'arbre de verrouillage 28 est contraint axialement dans sa position arrière de déverrouillage à l'encontre du second moyen de rappel élastique 92 lorsque le bâti arrière 32, et le capot 14, occupent leur position avant rassemblée, et l'arbre de verrouillage 28 est libéré automatiquement dans sa position avant de verrouillage lorsque le bâti arrière 32, et le capot 14, sont entraînés vers leur position arrière déployée.

Selon sa fonction première, le mécanisme 24 selon l'invention entraîne en rotation un élément récepteur 94, ici la couronne annulaire de sortie 94, qui est monté en rotation autour de l'axe longitudinal A principal.

La couronne annulaire de sortie 94 est conçue pour entraîner en mouvement la tuyère 20 adaptative décrite précédemment, par l'intermédiaire d'un dispositif d'entraînement (non représenté).

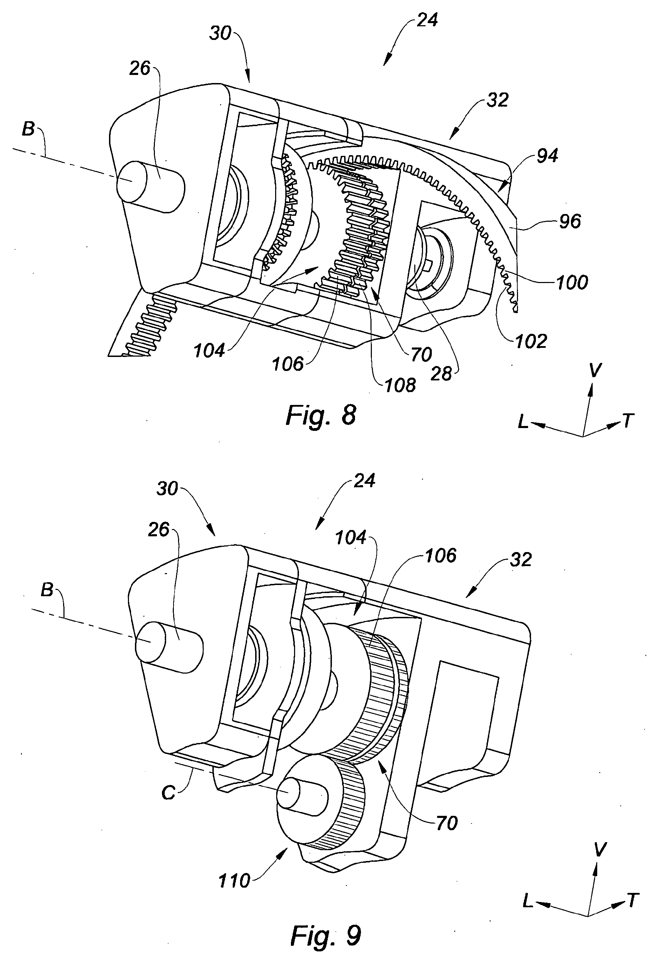

A cet effet, comme on peut le voir aux figures 4 et 8, la couronne annulaire de sortie 94 présente une section rectangulaire et elle comporte une première portion externe 96 périphérique annulaire qui coopère avec un logement 98 complémentaire formé dans le bâti arrière 32 pour solidariser la couronne 94 et le bâti arrière 32 en translation axiale.

Aussi, la couronne 94 comporte une seconde portion interne 100 annulaire qui délimite une denture réceptrice 102 axiale.

De façon complémentaire, l'extrémité axiale arrière 38 de l'arbre d'entrée 26 est solidaire en rotation, autour de l'axe B secondaire, d'un pignon moteur 104 qui délimite une denture 106 axiale annulaire du même diamètre que la denture 108 axiale du pignon de verrouillage 70 monté sur l'arbre de verrouillage 28.

De plus, le pignon moteur 104 est accolé axialement au pignon de verrouillage 70 lorsque l'arbre de verrouillage 28 occupe sa position arrière de déverrouillage, comme on peut le voir aux figures 4 et 8.

Ainsi, lorsque le bâti arrière 32 et le capot 14 occupent leur position avant rassemblée, la couronne annulaire de sortie 94 occupe une position motrice dans laquelle la couronne annulaire de sortie 94 engrène sur le pignon moteur 104, de sorte que l'entraînement en rotation de l'arbre d'entrée 26 provoque l'entraînement en rotation de la couronne 94.

A l'inverse, lorsque la bâti arrière 32 et le capot 14 occupent leur position arrière déployée, en référence à la figure 7, la couronne annulaire de sortie 94 occupe une position bloquée dans laquelle le pignon de verrouillage 70 engrène sur la couronne annulaire de sortie 94. Le pignon de verrouillage 70 verrouille donc en rotation la couronne annulaire de sortie 94.

Pour passer de sa position motrice à sa position bloquée, la couronne annulaire de sortie 94 coulisse axialement vers l'arrière depuis la denture 106 axiale du pignon moteur 104, jusque sur la denture 108 axiale du pignon de verrouillage 70, au cours du coulissement de l'arbre de verrouillage 28 vers sa position avant de verrouillage et du déplacement du bâti arrière 32 vers sa position arrière déployée.

Dans la suite de la description, le verrouillage automatique de l'arbre d'entrée 26 et de l'arbre de verrouillage 28, donc de la couronne annulaire de sortie 94, est décrit de façon chronologique.

En référence à la figure 4, le bâti arrière 32 occupe sa position avant rassemblée initiale dans laquelle l'arbre d'entrée 26 et l'arbre de verrouillage 28 sont libres en rotation et accouplés en rotation autour de l'axe B secondaire. La couronne de sortie annulaire 94 engraine sur le pignon moteur 104 solidaire en rotation avec l'arbre d'entrée 26.

Au cours du déplacement du capot 14 arrière vers l'arrière, le bâti arrière 32, qui est solidaire en translation du capot 14, est entraîné en déplacement depuis sa position avant rassemblée, vers sa position arrière déployée.

Dans un premier temps, selon la figure 5, le premier moyen de verrouillage 44 verrouille l'arbre d'entrée 26 en rotation par le déplacement automatique de la bague de verrouillage 52 depuis sa position avant de déverrouillage, vers sa position arrière de verrouillage.

Dans un second temps, selon la figure 6, le second moyen de verrouillage 46 verrouille l'arbre de verrouillage 28 en rotation par le déplacement de l'arbre de verrouillage 28 depuis sa position arrière de déverrouillage, vers sa position avant de verrouillage.

De plus, au cours du déplacement du bâti arrière 32 vers sa position arrière déployée, ce dernier transfère la couronne annulaire de sortie 94 depuis sa position motrice, ou entraînée, jusqu'à sa position bloquée, grâce à l'intervention de l'arbre de verrouillage 28. La couronne annulaire de sortie 94 n'engrène plus avec l'arbre d'entrée 26.

Dans un troisième temps, le moyen d'accouplement 34 désaccouple l'arbre d'entrée 26 et l'arbre de verrouillage 28 lorsque le bâti arrière 32 rejoint sa position arrière déployée, comme on peut le voir à la figure 7.

Ainsi, le moyen d'accouplement 34 désaccouple l'arbre d'entrée 26 et l'arbre de verrouillage 28 à la suite du verrouillage en rotation de l'arbre d'entrée 26 et de l'arbre de verrouillage 28, et du verrouillage en rotation de la couronne annulaire de sortie 94.

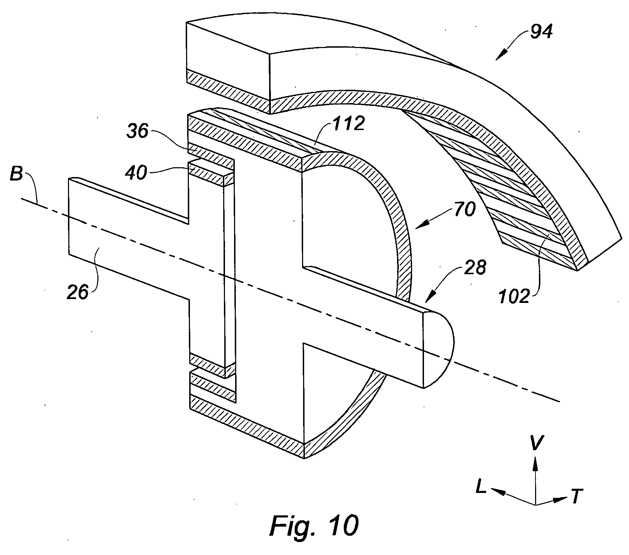

Selon une variante de réalisation représentée à la figure 10, le pignon 70 de l'arbre de verrouillage 28 délimite une denture 112 suffisamment large axialement pour que la denture 102 de la couronne annulaire de sortie 94 coopère en permanence avec la denture 112 du pignon 70 de l'arbre de verrouillage 28, lors du déplacement de la couronne annulaire de sortie 94 depuis sa position motrice, jusqu'à sa position bloquée.

Ainsi, comme le montre la figure 10, lorsque le bâti arrière 32 occupe sa position avant rassemblée, la couronne annulaire de sortie 94 occupe sa position motrice dans laquelle elle engrène directement sur le pignon de sortie 70 de l'arbre de verrouillage 28.

Selon cette variante, pour passer de sa position motrice à sa position bloquée, la couronne annulaire de sortie 94 coulisse axialement sur la denture 112 axiale du pignon de verrouillage 70, au cours du coulissement de l'arbre de verrouillage 28 vers sa position avant de verrouillage et du déplacement du bâti arrière 32 vers sa position arrière déployée.

Selon une autre variante de réalisation représentée à la figure 9, la couronne annulaire de sortie 94 est remplacée par un pignon récepteur 110 qui est monté en rotation autour d'un axe C récepteur longitudinal sur le bâti arrière 32.

A titre non limitatif, les dentures cylindriques des différents pignons de transmission peuvent être remplacées par des dentures coniques.

De même, les liaisons et guidages des composants en rotation pourront être assurés par des paliers, ou des roulements, ou autres systèmes équivalents aptes à assurer un guidage en rotation ou en coulissement.

## Revendications

1. Mécanisme (24) pour l'accouplement et le désaccouplement d'un arbre d'entrée (26) moteur qui est monté à rotation sur un bâti avant (30) autour d'un axe (B) secondaire longitudinal, et d'un arbre de sortie (28) qui est monté à rotation sur un bâti arrière (32) autour de l'axe (B) secondaire et qui entraîne en rotation un pignon de sortie (70), le bâti arrière (32) étant monté coulissant d'avant en arrière par rapport au bâti avant (30), selon une direction longitudinale, entre une position avant rassemblée et une position arrière déployée, le mécanisme (24) étant équipé d'un moyen d'accouplement (34) qui est conçu pour accoupler en rotation l'arbre d'entrée (26) et l'arbre de sortie (28) entre eux lorsque le bâti arrière (32) mobile occupe sa position avant rassemblée, et pour désaccoupler l'arbre d'entrée (26) et l'arbre de sortie (28) lorsque le bâti arrière (32) occupe sa position arrière déployée, **caractérisé en ce que** le mécanisme (24) comporte un premier moyen de verrouillage (44) en rotation de l'arbre d'entrée (26) sur le bâti avant (30) associé, et un second moyen de verrouillage (46) en rotation de l'arbre de sortie (28) sur le bâti arrière (32) associé, les premier et second moyens de verrouillage (44, 46) verrouillant automatiquement l'arbre d'entrée (26) et l'arbre de sortie (28) en rotation respectivement, sous l'effet du déplacement du bâti arrière (32) mobile vers sa position arrière déployée.

2. Mécanisme (24) selon la revendication 1, **caractérisé en ce que** le premier moyen de verrouillage (44) de l'arbre d'entrée (26), du type à crabot, comporte :
- un premier pignon de verrouillage (48) qui est lié en rotation sur l'arbre d'entrée (26) autour de l'axe (B) secondaire et qui délimite une première denture (50) radiale orientée vers l'avant,
- une bague de verrouillage (52) qui délimite une seconde denture (60) radiale agencée en regard de ladite première denture (50), la bague de verrouillage (52) étant montée coulissante axialement sur le bâti avant (30) entre une position avant de déverrouillage dans laquelle la première denture (50) est agencée en regard de la deuxième denture (60) associée, et une position arrière de verrouillage dans laquelle la première denture (50) coopère avec la deuxième denture (60) pour verrouiller en rotation l'arbre d'entrée (26) sur le bâti avant (30) associé,
- un premier moyen de rappel élastique (64) qui est interposé axialement entre le bâti avant (30) et la bague de verrouillage (52) et qui rappelle automatiquement la bague de verrouillage (52) vers sa position arrière de verrouillage, et **en ce que** le bâti arrière (32) mobile comporte une portion d'appui (66) qui est conçue pour appuyer axialement contre la bague de verrouillage (52) vers l'avant, de sorte que la bague de verrouillage (52) est contrainte axialement dans sa position avant de déverrouillage à l'encontre du premier moyen de rappel élastique (64) lorsque le bâti arrière (32) occupe sa position avant rassemblée, et la bague (52) est libérée automatiquement dans sa position arrière de verrouillage lorsque le bâti arrière (32) est entraîné vers sa position arrière déployée.

3. Mécanisme (24) selon l'une quelconque des revendications précédentes, **caractérisé en ce que** le second moyen de verrouillage (46) de l'arbre de sortie (28), du type à crabot, comporte :
- une troisième denture (68) radiale qui est solidaire du bâti arrière (32) et qui est orientée vers l'arrière,
- un second pignon de verrouillage (72) qui est lié en rotation sur l'arbre de sortie (28) autour de l'axe (B) secondaire et qui délimite une quatrième denture (76) radiale agencée en regard de ladite troisième denture (68),
- un moyen de guidage (80) en coulissement axial de l'arbre de sortie (28) entre une position arrière de déverrouillage dans laquelle la troisième denture (68) est agencée en regard de la quatrième denture (76), et une position avant de verrouillage dans laquelle la troisième denture (68) coopère avec la quatrième denture (76) pour verrouiller en rotation l'arbre de sortie (28) sur le bâti arrière (32) associé,
- un second moyen de rappel élastique (92) qui est interposé axialement entre le bâti arrière (32) et le second pignon de verrouillage (72) pour rappeler automatiquement l'arbre de sortie (28) vers sa position avant de verrouillage, de sorte que l'arbre de sortie (28) est contraint axialement dans sa position arrière de déverrouillage à l'encontre du second moyen de rappel élastique (92) lorsque le bâti arrière (32) mobile occupe sa position avant rassemblée, et l'arbre de sortie (28) est libéré automatiquement dans sa position avant de verrouillage lorsque le bâti arrière (32) mobile est entraîné vers sa position arrière déployée.

4. Mécanisme (24) selon l'une quelconque des revendications précédentes, **caractérisé en ce que** le premier moyen de verrouillage (44) verrouille l'arbre d'entrée (26) avant que le second moyen de verrouillage (46) verrouille l'arbre de sortie (28).

5. Mécanisme (24) selon l'une quelconque des revendications précédentes, **caractérisé en ce que** le moyen d'accouplement (34) désaccouple l'arbre d'entrée (26) et l'arbre de sortie (28) à la suite du verrouillage en rotation de l'arbre d'entrée (26) et de l'arbre de sortie (28).

6. Mécanisme (24) selon l'une quelconque des revendications précédentes, **caractérisé en ce que** le moyen d'accouplement (34) de l'arbre d'entrée (26) avec l'arbre de sortie (28) est du type à crabot et comporte une première portion d'accouplement (36) à denture axiale qui est agencée sur une extrémité axiale arrière (38) de l'arbre d'entrée (26), et une seconde portion d'accouplement (40) à denture axiale de forme complémentaire qui est agencée sur une extrémité axiale avant (42) de l'arbre de sortie (28).

7. Mécanisme (24) selon l'une quelconque des revendications précédentes, **caractérisé en ce qu'**il est conçu pour entraîner en rotation un élément récepteur (94) qui est monté à rotation autour d'un axe (A) principal longitudinal et qui est conçu pour entraîner en mouvement une tuyère (20) adaptative du turboréacteur.

8. Mécanisme selon la revendication 7, **caractérisé en ce que** l'arbre d'entrée (26) est solidaire en rotation d'un pignon moteur (104) qui délimite une denture (106) du même diamètre que la denture (108) du pignon de sortie (70) et qui est accolé axialement au pignon de sortie (70) lorsque l'arbre de sortie (28) occupe sa position arrière de déverrouillage, et **en ce que** l'élément récepteur (94) est solidaire en translation axiale du bâti arrière (32), l'élément récepteur (94) délimitant une denture réceptrice (102) conçue pour coulisser axialement depuis la denture (106) du pignon moteur (104), jusque sur la denture (108) du pignon de sortie (70) au cours du coulissement de l'arbre de sortie (28) vers sa position avant de verrouillage pour permettre le verrouillage en rotation de l'élément récepteur (94).

9. Mécanisme (24) selon la revendication 8, **caractérisé en ce que** l'élément récepteur (94) est une couronne annulaire qui comporte :
- une portion externe (96) périphérique annulaire qui coopère avec un logement (98) complémentaire formé dans le bâti arrière (32) pour solidariser l'élément récepteur (94) et le bâti arrière (32) en translation axiale, et
- une portion interne (100) annulaire qui délimite la denture réceptrice (102) qui est conçue pour engrener avec le pignon moteur (104) et le pignon de sortie (70).

10. Mécanisme (24) selon l'une quelconque des revendications précédentes, **caractérisé en ce que** le bâti arrière (32) est porté par un capot (14) mobile d'un dispositif embarqué d'inversion de poussée d'un turboréacteur.

11. Nacelle (10) de turboréacteur, **caractérisée en ce qu'**elle est équipée d'un mécanisme (24) pour l'accouplement et le désaccouplement selon l'une quelconque des revendications précédentes.

## Patentansprüche

1. Mechanismus (24) zum Koppeln und Abkoppeln einer Motoreingangswelle (26), die drehend auf einem vorderen Gestell (30) um eine Längsnebenachse (B) montiert ist, und einer Ausgangswelle (28), die drehend auf einem hinteren Gestell (32) um die Nebenachse (B) montiert ist und ein Ausgangsritzel (70) in Drehung antreibt, wobei das hintere Gestell (32) von vorn nach hinten in Bezug auf das vordere Gestell (30) entlang einer Längsrichtung gleitend, zwischen einer vorderen eingefahrenen Position und einer hinteren ausgefahrenen Position montiert ist, wobei der Mechanismus (24) mit einem Kopplungsmittel (34) ausgestattet ist, das ausgelegt ist, um die Eingangswelle (26) und die Ausgangswelle (28) miteinander in Drehung zu koppeln, wenn das mobile hintere Gestell (32) seine vordere eingefahrene Position einnimmt, und um die Eingangswelle (26) und die Ausgangswelle (28) abzukoppeln, wenn das hintere Gestell (32) seine hintere ausgefahrenen Position einnimmt, **dadurch gekennzeichnet, dass** der Mechanismus (24) ein erstes Mittel (44) zum Verriegeln in Drehung der Eingangswelle (26) auf dem dazu gehörenden vorderen Gestell (30), und ein zweites Mittel (46) zum Verriegeln in Drehung der Ausgangswelle (28) auf dem dazu gehörenden hinteren Gestell (32) umfasst, wobei das erste und das zweite Verriegelungsmittel (44, 46) die Eingangswelle (46) und die Ausgangswelle (28) automatisch jeweils in Drehung unter der Einwirkung der Bewegung des mobilen hinteren Gestells (32) zu seiner hinteren ausgefahrenen Position verriegeln.

2. Mechanismus (24) nach Anspruch 1, **dadurch gekennzeichnet, dass** das erste Verriegelungsmittel (44) der Eingangswelle (26) des Typs Klaue Folgendes umfasst:
- ein erstes Verriegelungsritzel (48), das in Drehung um die Nebenachse (B) auf der Eingangswelle (26) verbunden ist und eine erste radiale Verzahnung (50), die zur Vorderseite ausgerichtet ist, abgrenzt,
- einen Verriegelungsring (52), der eine zweite radiale Verzahnung (60) abgrenzt, die gegenüber der ersten Verzahnung (50) eingerichtet ist, wobei der Verriegelungsring (52) axial auf dem vorderen Gestell (30) zwischen einer vorderen Verriegelungsposition, in der die erste Verzahnung (50) gegenüber der zweiten dazugehörenden Verzahnung (60) eingerichtet ist, und einer hinteren Verriegelungsposition, in der die erste Verzahnung (50) mit der zweiten Verzahnung (60) zusammenwirkt, um die Eingangswelle (26) auf dem dazu gehörenden vorderen Rahmen (30) zu verriegeln, gleitend montiert ist,
- ein erstes elastisches Rückstellmittel (64), das axial zwischen dem vorderen Gestell (30) und dem Verriegelungsring (52) eingefügt ist und den Verriegelungsring (52) automatisch zu seiner hinteren Verriegelungsposition zurückstellt, und dass der mobile hintere Rahmen (32) einen Auflageabschnitt (66) umfasst, der ausgelegt ist, um axial gegen den Verriegelungsring (52) nach vorn derart zu drücken, dass der Verriegelungsring (52) axial in seine vordere Entriegelungsposition gegen das erste elastische Rückstellmittel (64) gedrückt wird, wenn das hintere Gestell (32) seine vordere eingefahrene Position einnimmt, und der Ring (52) automatisch in seiner hinteren Verriegelungsposition freigegeben wird, wenn das hintere Gestell (32) zu seiner ausgefahrenen hinteren Position angetrieben wird.

3. Mechanismus (24) nach einem der vorhergehenden Ansprüche, **dadurch gekennzeichnet, dass** das zweite Mittel (46) zum Verriegeln der Ausgangswelle (28) des Typs Klaue Folgendes umfasst:
- eine dritte radiale Verzahnung (68), die fest mit dem hinteren Gestell (32) verbunden und nach hinten ausgerichtet ist,
- ein zweites Verriegelungsritzel (72), das in Drehung auf der Ausgangswelle (28) um die Nebenachse (B) verbunden ist und eine vierte radiale Verzahnung (76) abgrenzt, die gegenüber der dritten Verzahnung (68) eingerichtet ist,
- ein Führungsmittel (18) in axialem Gleiten der Ausgangswelle (28) zwischen einer hinteren Entriegelungsposition, in der die dritte Verzahnung (68) gegenüber der vierten Verzahnung (76) eingerichtet ist, und einer vorderen Verriegelungsposition, in der die dritte Verzahnung (68) mit der vierten Verzahnung (76) zusammenwirkt, um die Ausgangswelle (28) in Drehung auf dem dazu gehörenden hinteren Gestell (32) zu verriegeln,
- ein zweites elastisches Rückstellmittel (92), das axial zwischen das hintere Gestell (32) und das zweite Verriegelungsritzel (72) eingefügt ist, um die Ausgangswelle (28) automatisch zu ihrer vorderen Verriegelungsposition derart zurückzustellen, dass die Ausgangswelle (28) axial in ihre hintere Entriegelungsposition gegen das zweite elastische Rückstellmittel (92) gedrückt wird, wenn das mobile hintere Gestell (32) seine vordere eingefahrene Position einnimmt, und die Ausgangswelle (28) automatisch in ihrer vorderen Verriegelungsposition freigegeben wird, wenn das mobile hintere Gestell (32) zu seiner ausgefahrenen hinteren Position angetrieben wird.

4. Mechanismus (24) nach einem der vorhergehenden Ansprüche, **dadurch gekennzeichnet, dass** das erste Verriegelungsmittel (44) die Eingangswelle (26) verriegelt, bevor das zweite Verriegelungsmittel (46) die Ausgangswelle (28) verriegelt.

5. Mechanismus (24) nach einem der vorhergehenden Ansprüche, **dadurch gekennzeichnet, dass** das Kopplungsmittel (34) die Eingangswelle (26) und die Ausgangswelle (28) im Anschluss an die Verriegelung in Drehung der Eingangswelle (26) und der Ausgangswelle (28) abgekoppelt.

6. Mechanismus (24) nach einem der vorhergehenden Ansprüche, **dadurch gekennzeichnet, dass** das Mittel (34) zum Koppeln der Eingangswelle (26) mit der Ausgangswelle (28) des Typs mit Klaue ist und einen ersten Kopplungsabschnitt (36) mit axialer Verzahnung umfasst, der auf einem hinteren axialen Ende (38) der Eingangswelle (26) eingerichtet ist, und einen zweiten Kopplungsabschnitt (40) mit axialer Verzahnung mit komplementärer Form, der auf einem vorderen axialen Ende (42) der Ausgangswelle (28) eingerichtet ist.

7. Mechanismus (24) nach einem der vorhergehenden Ansprüche, **dadurch gekennzeichnet, dass** er ausgelegt ist, um ein Aufnahmeelement (94) in Drehung anzutreiben, das in Drehung um eine Längshauptachse (A) montiert und ausgelegt ist, um ein adaptives Strahlrohr (20) des Turboreaktors in Bewegung anzutreiben.

8. Mechanismus nach Anspruch 7, **dadurch gekennzeichnet, dass** die Eingangswelle (26) in Drehung fest mit einem Antriebsritzel (104) verbunden ist, das eine Verzahnung (106) mit demselben Durchmesser wie die Verzahnung (108) des Ausgangswitzes (70) abgrenzt und axial an das Ausgangsritzel (70) angefügt ist, wenn die Ausgangswelle (28) ihre hintere Entriegelungsposition einnimmt, und dass das Aufnahmeelement (94) in axialer Verschiebung mit dem hinteren Gestell (32) fest verbunden ist, wobei das Aufnahmeelement (94) eine Aufnahmeverzahnung (102) abgrenzt, die ausgelegt ist, um axial von der Verzahnung (106) des Antriebsritzels (104) bis auf die Verzahnung (108) des Ausgangsritzels (70) im Laufe des Gleitens der Ausgangswelle (28) zu ihrer vorderen Verriegelungsposition zu gleiten, um das Verriegeln in Drehung des Aufnahmeelements (94) zu erlauben.

9. Mechanismus (24) nach Anspruch 8, **dadurch gekennzeichnet, dass** das Aufnahmeelement (94) ein ringförmiger Kranz ist, der Folgendes umfasst:
- einen ringförmigen umfänglichen äußeren Abschnitt (96), der mit einer komplementären Aufnahme (98), die in dem hinteren Rahmen (32) ausgebildet ist, zusammenwirkt, um das Aufnahmeelement (94) und den hinteren Rahmen (32) in axialer Verschiebung fest zu verbinden, und
- einen ringförmigen internen Abschnitt (100), der die Aufnahmeverzahnung (102) abgrenzt, die ausgelegt ist, um in das Antriebsritzel (104) und das Ausgangsritzel (70) einzugreifen.

10. Mechanismus (24) nach einem der vorhergehenden Ansprüche, **dadurch gekennzeichnet, dass** das hintere Gestell (32) von einer beweglichen Haube (14) einer Onboard-Vorrichtung zum Schubumkehren eines Turboreaktors getragen wird.

11. Turboreaktorgondel (10), **dadurch gekennzeichnet, dass** sie mit einem Mechanismus (24) zum Koppeln und Abkoppeln nach einem der vorhergehenden Ansprüche ausgestattet ist.

## Claims

1. A mechanism (24) for coupling and uncoupling a drive input shaft (26) which is rotatably mounted on a front frame (30) about a secondary longitudinal axis (B), and an output shaft (28) which is rotatably mounted on a rear frame (32) about the secondary axis (B) and which rotatably drives an output pinion (70), the rear frame (32) being slidably mounted back and forth relative to the front frame front (30), along a longitudinal direction, between an assembled front position and a deployed rear position, the mechanism (24) being equipped with a coupling means (34) which is designed so as to rotatably couple the input shaft (26) and the output shaft (28) to each other when the movable back frame (32) occupies its assembled front position, and to uncouple the input shaft (26) and the output shaft (28) when the rear frame (32) occupies its deployed rear position, **characterized in that** the mechanism (24) includes a first means (44) for rotatably locking the input shaft (26) on the associated front frame (30), and a second means (46) for rotatably locking the output shaft (28) on the associated rear frame (32), the first and second locking means (44, 46) automatically locking the rotation of the input shaft (26) and output shaft (28) respectively, under the effect of the displacement of the movable rear frame (32) back to its deployed rear position.

2. The mechanism (24) according to claim 1, **characterized in that** the first locking means (44) of the input shaft (26), of the dog clutch type, includes:
- a first locking pinion (48) which is rotatably connected on the input shaft (26) about the secondary axis (B) and which delimits a first radial toothing (50) oriented forward,
- a locking ring (52) which delimits a second radial toothing (60) arranged facing said first toothing (50), the locking ring (52) being slidingly mounted axially on the front frame (30) between an unlocking front position in which the first toothing (50) is arranged facing the second associated toothing (60), and a rear locking position in which the first toothing (50) cooperates with the second toothing (60) so as to rotatably lock the input shaft (26) on the associated front frame (30),
- a first elastic return means (64) which is axially interposed between the front frame (30) and the locking ring (52) and which automatically returns the locking ring (52) toward its locking rear position, and **in that** the movable rear frame (32) includes a bearing portion (66) which is designed so as to bear axially forward against the locking ring (52), so that the locking ring (52) is axially constrained in its unlocking front position against the first elastic return means (64) when the rear frame (32) occupies its assembled front position, and the ring (52) is automatically released in its locking rear position when the back frame (32) is driven back to its deployed rear position.

3. The mechanism (24) according to any one of the preceding claims, **characterized in that** the second locking means (46) of the output shaft (28), of the dog clutch type, includes:
- a third radial toothing (68) which is secured to the rear frame (32) and which is oriented rearward,
- a second locking pinion (72) which is rotatably connected on the output shaft (28) about the secondary axis (B) and which delimits a fourth radial toothing (76) arranged facing said third toothing (68),
- a means (80) for guiding the axial sliding of the output shaft (28) between a unlocking rear position in which the third toothing (68) is arranged facing the fourth toothing (76), and a locking front position in which the third toothing (68) cooperates with the fourth teeth (76) so as to rotatably lock the output shaft (28) on the associated rear frame (32),
- a second elastic return means (92) which is axially interposed between the rear frame (32) and the second locking pinion (72) so as to automatically return the output shaft (28) toward its locking front position, so that the output shaft (28) is axially constrained in its unlocking rear position against the second elastic return means (92) when the movable rear frame (32) occupies its assembled front position, and the output shaft (28) is automatically released in its locking front position when the movable rear frame (32) is driven back to its deployed rear position.

4. The mechanism (24) according to any one of the preceding claims, **characterized in that** the first locking means (44) locks the input shaft (26) before that the second locking means (46) locks the output shaft (28).

5. The mechanism (24) according to any one of the preceding claims, **characterized in that** the coupling means (34) uncouples the input shaft (26) and the output shaft (28) subsequently to the rotational locking of the input shaft (26) and the output shaft (28).

6. The mechanism (24) according to any one of the preceding claims, **characterized in that** the means (34) for coupling the input shaft (26) with the output shaft (28) is of the dog clutch type and includes a first coupling portion (36) with an axial toothing which is arranged on a rear axial end (38) of the input shaft (26), and a second coupling portion (40) with an axial toothing with a complementary shape which is arranged on an front axial end (42) of the output shaft (28).

7. The mechanism (24) according to any one of the preceding claims, **characterized in that** it is designed so as to rotatably drive a receiver element (94) which is rotatably mounted about a longitudinal main axis (A) and which is designed so as to drive an adaptive nozzle (20) of the turbojet engine.

8. The mechanism according to claim 7, **characterized in that** the input shaft (26) is rotatably integral with a drive pinion (104) which delimits a toothing (106) of the same diameter as the toothing (108) of the output pinion (70) and which is axially conjoined with the output pinion (70) when the output shaft (28) occupies its unlocking rear position, and **in that** the receiver element (94) is integral in axial translation with the rear frame (32), the receiving element (94) delimiting a receiving toothing (102) designed so as to slide axially from the toothing (106) of the drive pinion (104), onto the toothing (108) of the output pinion (70) during the sliding of the output shaft (28) toward its locking front position for allowing the rotational locking of the receiver element (94).

9. The mechanism (24) according to claim 8, **characterized in that** the receiver element (94) is an annular rim which includes:
- an annular peripheral outer portion (96) which cooperates with a complementary housing (98) formed in the rear frame (32) to secure the receiver element (94) and the rear frame (32) in axial translation, and
- an annular inner portion (100) which delimits the receiving toothing (102) which is designed so as to mesh with the drive pinion (104) and the output pinion (70).

10. The mechanism (24) according to any one of the preceding claims, **characterized in that** the rear frame (32) is carried by a movable cowl (14) of an embedded thrust reverser device of a turbojet engine.

11. A nacelle (10) for a turbojet engine, **characterized in that** it is equipped with a coupling and uncoupling mechanism (24) according to any one of the preceding claims.
